# EUROPÄISCHE PATENTSCHRIFT

(11) **EP 3 074 183 B1**
(45) Veröffentlichungstag und Bekanntmachung des Hinweises auf die Patenterteilung: **08.04.2020**
(21) Anmeldenummer: 14802322.9
(22) Anmeldetag: 13.11.2014
(51) Int. Cl.: B25B 11/02, B25B 11/00, B29D 99/00, F03D 1/06

(54) **STEGSETZVORRICHTUNG, STEG UND FERTIGUNGSVERFAHREN FÜR EIN ROTORBLATT EINER WINDENERGIEANLAGE**
BRIDGE SETTING DEVICE, BRIDGE, AND PRODUCTION METHOD FOR A ROTOR BLADE OF A WIND POWER PLANT
DISPOSITIF DE MISE EN PLACE DE BARRE, BARRE ET PROCÉDÉ DE FABRICATION D'UNE PALE DE ROTOR D'UNE ÉOLIENNE

(30) Priorität: 28.11.2013 DE 102013224392
(43) Veröffentlichungstag der Anmeldung: 05.10.2016
(73) Patentinhaber: Senvion Deutschland GmbH, 22297 Hamburg (DE)
(72) Erfinder: BENDEL, Urs, 24787 Fockbek (DE); RICHERS, Tilman, 60314 Frankfurt am Main (DE); MESTER, Hendrik, 24118 Kiel (DE)
(74) Vertreter: Wallinger Ricker Schlotter Tostmann
(86) Internationale Anmeldenummer: PCT/EP2014/003039
(87) Internationale Veröffentlichungsnummer: WO 2015/078561

(56) Entgegenhaltungen:
- EP-A2- 2 261 501
- WO-A2-2009/153343
- DE-A1-102011 079 240
- DE-U1-202012 006 650

## Beschreibung

Die Erfindung betrifft eine Anordnung zum Ausrichten eines Stegs eines Rotorblattes einer Windenergieanlage.

Die Erfindung betrifft ferner ein Verfahren zum Fertigen eines Rotorblattes für eine Windenergieanlage, wobei das Rotorblatt wenigstens eine Rotorblattschale, einen in die Rotorblattschale integrierten Gurt und einen mit dem Gurt verbundenen Steg aufweist.

Bekannt sind Rotorblätter für Windenergieanlagen aus mehreren Einzelteilen, die einzeln in Faserverbundbauweise gefertigt und zu einem Rotorblatt verklebt werden. Die Einzelteile weisen zum Teil erhebliche Ausmaße auf und sind gewöhnlich flächig, d.h. die Dicke ist wesentlich kleiner als die Länge und die Breite.

Typische Rotorblätter bestehen aus wenigstens zwei Rotorblattschalen, die die äußere Form und somit die wesentlichen aerodynamischen Eigenschaften des Rotorblattes vorgeben. Beispielsweise ist eine Rotorblattschale für die Saugseite des Rotorblatts, die sogenannte Oberschale, und eine Rotorblattschale für die Druckseite des Rotorblatts, die sogenannte Unterschale, vorgesehen.

Die Rotorblattschalen sind üblicherweise im Bereich der größten Profildicke des Rotorblattes durch sogenannte Gurte verstärkt und im Bereich der Gurte durch Stege miteinander verbunden. Die Gurte und die Stege bilden dabei die wesentliche tragende Struktur des Rotorblattes, während die Rotorblattschalen ansonsten relativ leicht und dünn als Sandwichlaminate ausgebildet sind. Dabei werden beispielsweise auf einen leichten Sandwichkern aus Balsaholz oder sonstigem Füllmaterial beidseitig Schichten aus faserverstärkten Verbundwerkstoffen auflaminiert. Die Gurte werden üblicherweise in den Sandwichkern der Rotorblattschalen integriert oder nach Fertigung der Rotorblattschale auf deren innere Faserverbundschicht aufgeklebt.

Die Stege sind vor dem Verbinden mit den Gurten schwierig handzuhaben, da sie erhebliche Ausmaße aufweisen und dennoch mechanisch relativ labil sind. Bei der Handhabung der Stege werden daher sogenannte Stegsetzvorrichtungen eingesetzt, mittels derer ein Steg angehoben, stabilisiert und senkrecht zu einem Gurt einer Rotorblattschale ausgerichtet wird, um Steg und Gurt miteinander zu verkleben. Eine entsprechende Vorrichtung, die zusätzlich ein Andrücken des Steges an den Gurt ermöglicht, ist beispielsweise in DE 20 2012 006 650 U1 beschrieben. Ein Verfahren zum Fügen von Rotorblattschalen, Gurten und Stegen ist beispielsweise in US 8 454 791 B2 beschrieben.

EP 2 261 501 A2 offenbart ein übliches Verfahren und eine übliche Vorrichtung zur Montage eines Rotorblatts für eine Windenergieanlage, bei der zunächst ein Gurt in eine Rotorblattschale in Form einer Halbschale eingebracht wird und dann auf den Gurt Stege eingesetzt und verklebt werden, um anschließend eine zweite Rotorblatthalbschale aufzusetzen.

DE 10 2011 079 240 A1 offenbart eine Einrichtung und ein Verfahren zum Fertigen eines Bauteils einer Windenergieanlage.

WO 2009/153343 A2 offenbart ein Verfahren zur Herstellung eines Rotorblattes sowie einen Holmen zur Verwendung in einem Rotorblatt.

Auch mit den bekannten Stegsetzvorrichtungen bleibt das Verbinden von Steg und Gurt ein langwieriger und aufwendiger Prozess mit geringer Präzision und schlechter Reproduzierbarkeit.

Ausgehend von diesem Stand der Technik liegt der Erfindung die Aufgabe zugrunde, das Zusammenführen von Stegen und Gurten zu verbessern, wobei insbesondere die Positionierung zueinander präziser und reproduzierbarer gestaltet sowie die Prozesszeit verkürzt werden sollen.

Diese Aufgabe wird gelöst durch eine Anordnung zum Ausrichten eines Stegs für ein Rotorblatt einer Windenergieanlage und einer Stegsetzvorrichtung für den Steg, wobei die Anordnung wenigstens ein erstes Ausrichtungselement an der Stegsetzvorrichtung und wenigstens ein zweites Ausrichtungselement an dem Steg umfasst, wobei das erste Ausrichtungselement und das zweite Ausrichtungselement wenigstens abschnittsweise formkomplementär zueinander ausgebildet sind.

Durch die Erfindung wird insbesondere erreicht, dass der Steg beim Aufnehmen eine mittels der Ausrichtungselemente vorgegebene Ausrichtung zur Stegsetzvorrichtung einnimmt und in dieser Ausrichtung von der Stegsetzvorrichtung gehalten wird.

Erfindungsgemäß weisen die Ausrichtungselemente formkomplementäre Oberflächen auf, die jeweils wenigstens zwei nichtparallele Kontaktflächen aufweisen. Dadurch wird gewährleistet, dass die Ausrichtungselemente bei Annäherung der Stegsetzvorrichtung an den Steg einfach miteinander in Eingriff kommen und nicht verkanten.

Die Ausrichtungselemente sind bevorzugt rotationssymmetrisch ausgebildet. Beispielsweise weisen die Kontaktflächen die Form eines Kugelausschnittes oder eines Kegelmantels oder eines Mantels eines Kegelstumpfes auf.

Die Begriffe erstes Ausrichtungselement und zweites Ausrichtungselement sind im Rahmen der Erfindung insbesondere qualitativ unterschieden, indem ein erstes Ausrichtungselement definitionsgemäß an der Stegsetzvorrichtung und ein zweites Ausrichtungselement definitionsgemäß an dem Steg angeordnet ist.

Vorzugsweise umfasst die erfindungsgemäße Anordnung mehrere erste Ausrichtungselemente und mehrere zweite Ausrichtungselemente, wobei jeweils ein erstes Ausrichtungselement und ein zweites Ausrichtungselement einander zugeordnet sind und jeweils die einander zugeordneten Ausrichtungselemente wenigstens abschnittsweise formkomplementär zueinander ausgebildet sind.

Auf diese Weise wird sichergestellt, dass an mehreren Stellen oder Punkten die Ausrichtung oder Positionierung des Steges relativ zu der Stegsetzvorrichtung vorgegeben wird, so dass einem ungewollten Verformen des Stegs beim Aufnehmen mittels der Stegsetzvorrichtung entgegengewirkt wird.

Die Stegsetzvorrichtung umfasst wenigstens eine Haltevorrichtung zum Halten des Steges und wenigstens ein erstes Ausrichtungselement.

Beispielsweise ist das Ausrichtungselement der Haltevorrichtung zugeordnet oder bei der Haltevorrichtung angeordnet.

Wenn die Stegsetzvorrichtung mehrere Haltevorrichtungen umfasst, ist vorzugsweise jeder Haltevorrichtung wenigstens ein Ausrichtungselement zugeordnet oder bei jeder Haltevorrichtung ein Ausrichtungselement angeordnet.

Das wenigstens eine erste Ausrichtungselement oder die mehreren ersten Ausrichtungselemente sind beispielsweise lösbar an der Stegsetzvorrichtung angeordnet. Durch Entfernen, Hinzufügen und/oder Versetzen von ersten Ausrichtungselementen an der Stegsetzvorrichtung wird so eine schnelle und einfache Anpassung der Stegsetzvorrichtung zur Verwendung mit einer vorgegebenen Bauart von Stegen ermöglicht.

Die für eine erste Bauart von Stegen vorgesehenen ersten Ausrichtungselemente an der Stegsetzvorrichtung bilden beispielsweise eine erste Gruppe von ersten Ausrichtungselementen. Eine Stegsetzvorrichtung kann dabei mehrere Gruppen von ersten Ausrichtungselementen aufweisen, wobei jeweils eine Gruppe von ersten Ausrichtungselementen für jeweils eine andere Bauart von Stegen vorgesehen ist. Dadurch wird die Flexibilität erhöht.

Vorzugsweise ist die Haltevorrichtung mit wenigstens einer Saugvorrichtung zum Halten des Steges mittels eines Saugdrucks ausgebildet.

Dadurch wird insbesondere gewährleistet, dass der Steg sicher mittels der Stegsetzvorrichtung gehalten wird oder sicher an der Stegsetzvorrichtung befestigbar ist, wobei gleichzeitig ein schnelles und flexibles Befestigen und/oder Lösen des Stegs ermöglicht wird.

Die Stegsetzvorrichtung verfügt ferner bevorzugt über einen Träger, an dem die wenigstens eine Haltevorrichtung befestigt ist.

Dadurch wird eine ausreichende mechanische Stabilität der Stegsetzvorrichtung zum Abstützen und Stabilisieren des Stegs ermöglicht.

Die wenigstens eine Haltevorrichtung ist vorzugsweise schwenkbar am Träger gelagert. Dies erleichtert insbesondere das Aufnehmen eines flach gelagerten Stegs und die Drehung des Stegs im Wesentlichen um eine Längsachse des Stegs, um den Steg aufzurichten und in dieser Lage relativ zum Gurt auszurichten.

Ferner bevorzugt ist die wenigstens eine Haltevorrichtung arretierbar, um ein ungewolltes Verschwenken relativ zum Träger zu verhindern.

Eine besonders bevorzugte Ausführungsform der Erfindung ist dadurch ausgezeichnet, dass die Stegsetzvorrichtung Aufsetzlager zum Aufsetzen der Stegsetzvorrichtung auf eine Absenkvorrichtung zum Heben und/oder Senken der Stegsetzvorrichtung umfasst.

Insbesondere sind die Aufsetzlager dazu ausgebildet, mit wenigstens abschnittsweise formkomplementären Gegenlagern an der Absenkvorrichtung zusammenzuwirken und bewirken dadurch eine präzise, reproduzierbare sowie stabile und dadurch sichere Ausrichtung der Stegsetzvorrichtung relativ zur, beispielsweise ortsfesten, Absenkvorrichtung.

Die Aufsetzlager sind vorzugsweise am Träger der Stegsetzvorrichtung angeordnet.

Beispielsweise sind geeignete Aufsetzlager als konische Dornen und entsprechende Gegenlager als konische Dornenaufnahmen oder Aussparungen ausgebildet oder umgekehrt.

Bei einer alternativen Ausführungsform der Erfindung umfasst die Stegsetzvorrichtung eine Absenkvorrichtung zum Heben und/oder Senken der wenigstens einen Haltevorrichtung und/oder des Trägers.

Bei dieser Ausführungsform umfasst die Stegsetzvorrichtung eine oder mehrere geeignete Standvorrichtungen, wobei vorzugsweise Positionsmarkierungen oder Positionslager für eine definierte Positionierung der Standvorrichtung oder Standvorrichtungen, beispielsweise relativ zum Untergrund oder zu einer Ablagevorrichtung für einen Gurt, vorgesehen sind. In diesem Zusammenhang kann eine Ablagevorrichtung auch eine Gurtfertigungsform oder eine Schalenfertigungsform sein.

Vorzugsweise umfasst der Steg das wenigstens eine zweite Ausrichtungselement der erfindungsgemäßen Anordnung.

Wenn der Steg als Faserverbundbauteil ausgebildet ist, ist oder wird das wenigstens eine zweite Ausrichtungselement vorzugsweise bei Fertigung des Steges in Faserverbundbauweise mittels einer Stegfertigungsform an dem Steg angeordnet oder ausgebildet.

Mittels der Stegfertigungsform wird dabei insbesondere die Position des Ausrichtungselements auf Steg vorgegeben, wodurch eine präzise und reproduzierbare Positionierung des Steges in einer entsprechenden Stegsetzvorrichtung gewährleistet ist.

Des Weiteren wird der Vorteil erzielt, dass die Position des zweiten Ausrichtungselements bei verschiedenen mittels derselben Stegfertigungsform gefertigten Stege innerhalb sehr geringer Toleranzen identisch ist.

Das zweite Ausrichtungselement wird beispielsweise aufgrund einer geeigneten Formgebung der Schalenfertigungsform als entsprechend abgeformter Teil der Stegoberfläche ausgebildet. Alternativ weist die Stegfertigungsform eine Aussparung oder Positionsmarkierung für ein Einlegeelement ausgebildetes Ausrichtungselement auf, das bei der anschließenden Fertigung des Steges wenigstens teilweise in die Faserverbundstruktur des Steges eingebettet und somit an einer Oberfläche des Steges angeordnet wird.

Wenn der Steg einen ersten Stegfuß zur Verbindung mit einem ersten Gurt, einen zweiten Stegfuß zur Verbindung mit einem zweiten Gurt und eine zwischen dem ersten Stegfuß und dem zweiten Stegfuß angeordnete Seitenfläche aufweist, ist das wenigstens eine zweite Ausrichtungselement vorzugsweise an der Seitenfläche angeordnet oder ausgebildet.

Das wenigstens eine zweite Ausrichtungselement ist vorzugsweise als Erhebung über einer Oberfläche, insbesondere der Seitenfläche, des Steges ausgebildet.

Insbesondere ist die Erhebung durch zusätzliches Material ausgebildet, wodurch die Erhebung bzw. das zweite Ausrichtungselement keinen nennenswerten Einfluss auf die mechanische Struktur des Steges, insbesondere die Faserdichte und Faserausrichtung des Faserverbundmaterials des Steges, hat. Die mechanischen Eigenschaften eines Steges entsprechen somit denen eines Steges ohne zweites Ausrichtungselement, der ansonsten baugleich zu dem erfindungsgemäßen Steg ist.

Die der Erfindung zugrundeliegende Aufgabe wird ferner gelöst durch ein Verfahren zum Fertigen eines Rotorblattes für eine Windenergieanlage, wobei das Rotorblatt wenigstens eine Rotorblattschale, einen mit der Rotorblattschale verbundenen Gurt und einen mit dem Gurt verbundenen Steg aufweist, wobei das Verfahren die folgenden Verfahrensschritte umfasst:
Fertigen des Gurts in einer Gurtfertigungsform;
Verbinden des Steges mit dem Gurt und
Fertigen der Rotorblattschale in einer Schalenfertigungsform, wobei der Gurt und der mit dem Gurt verbundene Steg gemeinsam in die Schalenfertigungsform eingebracht werden,
wobei der Steg und der Gurt unter Verwendung der erfindungsgemäßen Anordnung miteinander verbunden werden.

Der Steg ist dabei beispielsweise ein Steg mit einem zweiten Ausrichtungselement gemäß der vorangehenden Beschreibung.

Ein Vorteil des erfindungsgemäßen Verfahrens besteht darin, dass das Verbinden von Gurt und Steg nicht in der Schalenfertigungsform erfolgt und dadurch die Benutzungsdauer der Schalenfertigungsform wesentlich verkürzt wird. Dadurch kann die Fertigung mehrerer baugleicher Rotorblätter weiter parallelisiert werden, wodurch die Prozesszeit, insbesondere die mittlere Dauer zwischen der Fertigstellung zweier Rotorblätter, verkürzt wird.

Eine besonders einfache Handhabung der Stege wird erreicht, da der Steg und der Gurt unter Verwendung der Stegsetzvorrichtung miteinander verbunden werden.

Der Steg und der Gurt werden vorzugsweise vor Entformen des Gurtes aus der Gurtfertigungsform miteinander verbunden. Dadurch entfällt das separate Entformen des Gurtes, wodurch ein im Stand der Technik üblicher Verfahrensschritt eingespart und die Prozesszeit weiter verkürzt wird.

Besonders bevorzugt ist, dass der Gurt und der mit dem Gurt verbundene Steg mittels der Stegsetzvorrichtung in die Schalenfertigungsform eingebracht werden.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: schematisch eine Stegsetzvorrichtung gemäß einer Ausführungsform der Erfindung und
- Fig. 2a-c: schematisch ein Verfahren zum Fertigen eines Rotorblattes gemäß einer Ausführungsform der Erfindung.

In den Zeichnungen sind jeweils gleiche oder gleichartige Elemente und/oder Teile mit denselben Bezugsziffern versehen, so dass von einer erneuten Vorstellung jeweils abgesehen wird.

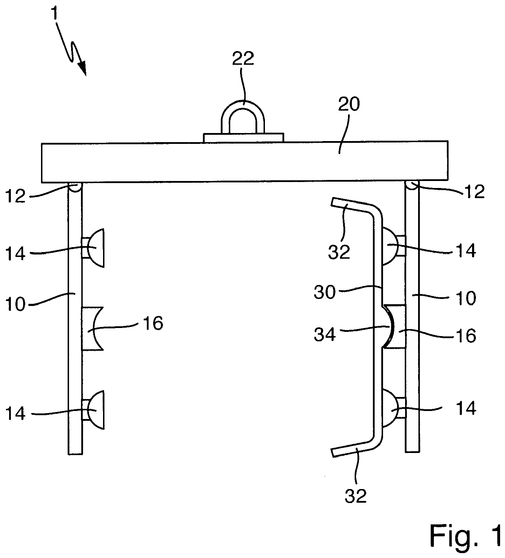

Fig. 1 zeigt schematisch eine Stegsetzvorrichtung 1 mit zwei Aufnahmevorrichtungen 10 für jeweils einen Steg 30 eines Rotorblattes einer Windenergieanlage. Auch dargestellt ist ein Steg 30, der in der bestimmungsgemäß vorgesehenen Ausrichtung mittels der rechts in der Zeichnung dargestellten Haltevorrichtung 10 gehalten wird.

Die Stegsetzvorrichtung 1 und der Steg 30 weisen jeweils eine Längserstreckung auf, die der Längserstreckung des Rotorblattes entspricht und die in etwa quer zu der in Fig. 1 dargestellten Zeichenebene 1 ausgerichtet ist.

Die Stegsetzvorrichtung 1 verfügt über einen Träger 20, der der Stegsetzvorrichtung 1 im Wesentlichen ihre mechanische oder strukturelle Stabilität verleiht. Der Träger 20 besteht beispielsweise aus einem Gitterrahmen oder einem massiven Metallträger und ist insbesondere derart ausgelegt, dass er das Eigengewicht der Stegsetzvorrichtung 1 sowie jenes der mittels der Stegsetzvorrichtung 1 haltbaren oder aufnehmbaren zwei Stege 30 ohne wesentliehe Verformung tragen kann.

An dem Träger 20 sind eine oder mehrere Befestigungsvorrichtungen 22 angeordnet, an denen beispielsweise ein Kran angeschlagen werden kann, um die Stegsetzvorrichtung 1 anzuheben und/oder zu versetzen.

Die Haltevorrichtungen 10 weisen jeweils zwei Saugglocken 14 auf, die an der glatten Seitenfläche des Steges 30, die zwischen den Stegfüßen 32 angeordnet ist, angesetzt und mittels Saugluft oder Unterdruck mit dem Steg 30 in Wirkverbindung gebracht werden, so dass der Steg 30 lösbar an der Stegsetzvorrichtung 1 gehalten oder befestigt wird.

Im Rahmen der Erfindung kann eine Haltevorrichtung 10 auch nur eine Saugglocke 14 oder mehr als zwei Saugglocken 14 aufweisen. Es können auch alternative oder zusätzliche Befestigungsmittel, beispielsweise eine Klemmvorrichtung, zum Befestigen oder Halten eines Steges 30 vorgesehen sein.

Die Haltevorrichtungen 10 weisen des Weiteren jeweils ein Ausrichtungselement 16 auf, das beispielsweise ausgebildet ist als Ausbuchtung mit einer dem Steg 30 zugewandten Oberfläche oder Kontaktfläche, die im gezeigten Beispiel die Form eines Kugelausschnittes hat. An dem Steg 30 ist ein hierzu formkomplementäres, als Erhebung mit kugelausschnittsförmiger oder kugelförmiger Oberfläche ausgebildetes, Ausrichtungselement 34 angeordnet.

Bei bestimmungsgemäßer Verwendung der Stegsetzvorrichtung 1 zum Halten eines Steges 30 werden das Ausrichtungselement 16 an der Stegsetzvorrichtung 1 bzw. an einer Haltevorrichtung 10 der Stegsetzvorrichtung 1 und das oder ein Ausrichtungselement 34 an dem oder einen Steg 30 miteinander in Eingriff gebracht, wodurch eine eindeutige, präzise und reproduzierbare Ausrichtung des Steges 30 relativ zur Haltevorrichtung 10 bzw. der Stegsetzvorrichtung 1 gewährleistet wird.

Die Haltevorrichtungen 10 sind jeweils mittels Schwenklager 12 schwenkbar an dem Träger 20 befestigt. Zum Aufnehmen eines Steges 30, der in der Regel flach liegend gelagert wird, wird eine Haltevorrichtung 10 beispielsweise verschwenkt, so dass die Saugglocken 14 an der Haltevorrichtung 10 nach unten weisen.

Anschließend wird die Stegsetzvorrichtung über dem flach liegenden Steg 30 positioniert. Dies erfolgt beispielsweise mittels eines nicht dargestellten Kranes, der insbesondere an einer geeigneten am Träger 20 der Stegsetzvorrichtung 1 angebrachten Befestigungsvorrichtung 22 angeschlagen ist oder wird.

Wenn die Stegsetzvorrichtung derart ausgerichtet ist, dass Ausrichtungselement 34 an dem Steg und Ausrichtungselement 16 an der entsprechenden Haltevorrichtung 10 miteinander in Eingriff befindlich sind, wird der Steg mittels der Saugglocken 14 und/oder entsprechend anderer an der Haltevorrichtung 10 vorhandener Befestigungsmittel lösbar an der Haltevorrichtung 10 befestigt oder fixiert.

Anschließend wird die Stegsetzvorrichtung 1 mit dem Steg 30 angehoben und die Haltevorrichtung 10 in die in Fig. 1 dargestellte, im Wesentlichen vertikale Position verschwenkt. Mittels einer geeigneten, nicht dargestellten Arretierungsvorrichtung wird die Haltevorrichtung 10 beispielsweise noch gegen unerwünschtes Verschwenken gesichert.

Entlang der Längserstreckung des Trägers 20 bzw. der Stegsetzvorrichtung 1 kann dabei für einen Steg 30 eine Vielzahl von hintereinander angeordneten Haltevorrichtungen 10 vorgesehen sein, um den Steg 30 entlang dessen Längserstreckung an einer entsprechenden Vielzahl von Haltestellen zu halten oder lösbar zu befestigen oder zu fixieren.

Im Folgenden wird ein exemplarisches Verfahren gemäß einer Ausführungsform der Erfindung zum Fertigen eines Rotorblattes einer Windenergieanlage beschrieben.

Das zu fertigende Rotorblatt umfasst beispielsweise zwei Gurte 40, die jeweils in eine von zwei Rotorblattschalen eingearbeitet oder mit den Rotorblattschalen verbunden werden. Die Rotorblattschalen werden beispielsweise als Sandwichlaminate in Faserverbundbauweise gefertigt. Das Rotorblatt umfasst des Weiteren zwei Stege 30, die jeweils zwischen den beiden Gurten 40 angeordnet und gefestigt werden.

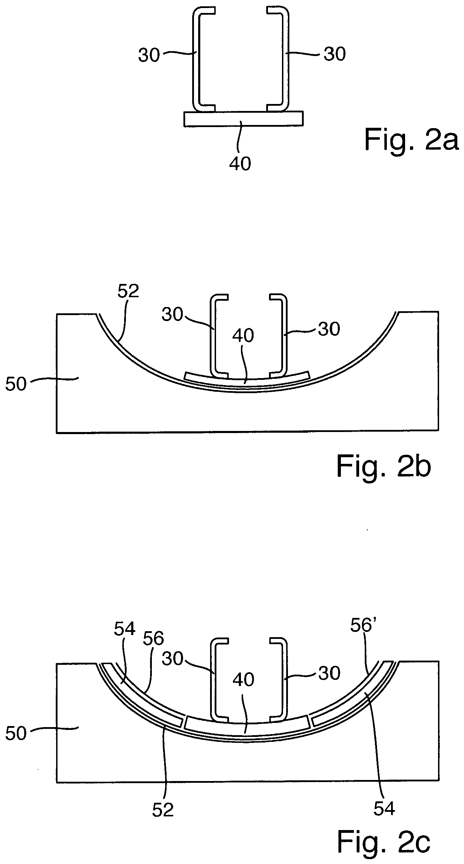

In den Fig. 2a bis 2c ist dabei jeweils schematisch ein Zustand des sich in der Fertigung befindlichen Rotorblattes gezeigt, wobei die Längserstreckung des Rotorblattes jeweils im Wesentlichen quer zu der Darstellungsebene ausgerichtet ist.

Zu Beginn werden zwei Stege 30 und ein Gurt 40 als separate Bauteile bereitgestellt. Die Stege 30 und der Gurt 40 sind dabei beispielsweise in Faserverbundbauweise unter Verwendung geeigneter Stegfertigungsformen bzw. Gurtfertigungsformen hergestellt.

Zunächst werden gemäß der Erfindung die beiden Stege 30 mit dem Gurt 40 verbunden, wie schematisch in Fig. 2a dargestellt ist. Hierfür befindet sich der Gurt 40 noch in der entsprechenden Gurtfertigungsform oder einer anderen geeigneten Gurtablage, die aus Gründen der Übersichtlichkeit in Fig. 2a nicht dargestellt ist. Insbesondere befindet sich der Gurt 40 in einer präzisen und reproduzierbaren, durch die Gurtfertigungsform bzw. die Gurtablage vorgegebenen Lage.

Die beiden Stege 30 werden beispielsweise mittels einer Stegsetzvorrichtung 1, beispielsweise der voranstehend beschriebenen erfindungsgemäßen Stegsetzvorrichtung 1, relativ zu dem Gurt 40 ausgerichtet und mit dem Gurt 40 verklebt oder anderweitig geeignet verbunden. Hierfür werden die beiden Stege 30 beispielsweise in der beschriebenen Weise mittels der Stegsetzvorrichtung 1 aufgenommen und zusammen mit der Stegsetzvorrichtung 1 zu der Gurtfertigungsform bzw. der Gurtablage gebracht.

Bei der Gurtfertigungsform bzw. der Gurtablage befindet sich beispielsweise eine Absenkvorrichtung, die ortsfest und/oder positionsstabil zu der Gurtfertigungsform bzw. der Gurtablage angeordnet ist. Die Stegsetzvorrichtung 1 mit den Stegen 30 wird auf der Absetzvorrichtung abgelegt, wobei die Absetzvorrichtung und die Stegsetzvorrichtung 1 hierfür geeignete Lager und/oder Gegenlager aufweisen. Die Lager und/oder Gegenlager sind dabei vorzugsweise derart ausgebildet, dass die Ausrichtung oder Positionierung der Stegsetzvorrichtung 1 auf der Absenkvorrichtung präzise und reproduzierbar vorgegeben ist oder wird.

Anschließend wird die Stegsetzvorrichtung mit den Stegen 30 mittels der Absenkvorrichtung in Richtung des Gurtes 30 abgesenkt, bis die Stege 30 die gewünschte Ausrichtung zu dem Gurt 40 erreichen und mit dem Gurt 40 verbunden, beispielsweise verklebt, werden.

Zum Fertigen der ersten der beiden Rotorblattschalen wird eine Schalenfertigungsform 50 bereitgestellt, die die äußere Form der späteren Rotorblattschale vorgibt. In der Schalenfertigungsform 50 wird eine äußere Faserverbundhülle 52 für die Rotorblattschale erstellt oder vorbereitet, was beispielsweise zeitlich parallel zu dem beschriebenen Verbinden der beiden Stege 30 mit dem Gurt 40 erfolgt.

Nun wird auf die äußere Faserverbundhülle 52 in der Schalenfertigungsform 50 der Gurt 40 mit den beiden verbundenen Stegen 30 eingebracht. Dies erfolgt vorzugsweise wiederum mittels der Stegsetzvorrichtung 1, die eine einfache Handhabung der beiden Stege 30 zusammen mit dem nunmehr mit den Stegen 30 verbundenen Gurt 40 ermöglicht.

Der Zustand des sich in Fertigung befindlichen Rotorblattes zu diesem Zeitpunkt im Ablauf des erfindungsgemäßen Verfahrens ist schematisch in Fig. 2b dargestellt.

Neben dem Gurt 40 wird ein Sandwichkern 54 in der Schalenfertigungsform 50 ausgelegt, der mit einer inneren Faserverbundhülle 56, 56' bedeckt wird. Die innere Faserverbundhülle weist dabei zwei getrennte Bereiche 56 und 56' auf, die auf jeweils einer anderen Seite des Gurtes 40 angeordnet sind und eine Saumkante entlang des Gurtes 40 aufweisen. An dieser Saumkante werden die Bereiche 56, 56' der inneren Faserverbundhülle fest mit dem Gurt 40 verbunden. Hierfür weist der Gurt 40 beispielsweise Faserlagen auf, die beim Fertigen des Gurtes im Seitenbereich offen gelassen wurden und nun in den Faserverbund der Faserverbundhülle 56, 56' eingearbeitet werden. Dieser Zustand des sich in der Fertigung befindlichen Rotorblattes ist schematisch in Fig. 2c dargestellt.

Das Rotorblatt wird komplettiert durch eine zweite, separat gefertigte Rotorblattschale, in die ein zweiter Gurt 40 eingearbeitet oder aufgesetzt ist. Die zweite Rotorblattschale wird auf das in Fig. 2c gezeigte, teilweise fertiggestellte Rotorblatt gestülpt, wobei der Gurt 40 an oder in der zweiten Rotorblattschale mit den beiden Stegen 30 und die zweite Rotorblattschale mit der ersten Rotorblattschale verbunden, insbesondere verklebt, wird.

Das erfindungsgemäße Verfahren bietet insbesondere aufgrund der Reihenfolge oder Abfolge der Verfahrensschritte vorteilhafterweise eine Verkürzung der Prozesszeit, die auch bei Verwendung herkömmlicher Stege 30 und Stegsetzvorrichtungen 1 wenigstens teilweise erreicht wird.

### Bezugszeichenliste

- 1: Stegsetzvorrichtung
- 10: Haltevorrichtung
- 12: Schwenklager
- 14: Saugglocke
- 16: Ausrichtungselement
- 20: Träger
- 22: Anschlagpunkt
- 30: Steg
- 32: Stegfuß
- 34: Ausrichtungselement
- 40: Gurt
- 50: Schalenform
- 52: äußere Faserverbundschicht
- 54: Sandwichkern
- 56, 56': innere Faserverbundschicht

## Patentansprüche

1. Anordnungzum Ausrichten eines Stegs (30) für ein Rotorblatt einer Windenergieanlage und einer Stegsetzvorrichtung (1) für den Steg (30), wobei die Anordnung wenigstens ein erstes Ausrichtungselement (16) an der Stegsetzvorrichtung (1) und wenigstens ein zweites Ausrichtungselement (34) an dem Steg (30)umfasst, wobei das erste Ausrichtungselement (16) und das zweite Ausrichtungselement (34) wenigstens abschnittsweise formkomplementär zueinander ausgebildet sind,
**dadurch gekennzeichnet, dass** die Ausrichtungselemente (16, 34) formkomplementäre Oberflächen aufweisen, die jeweils wenigstens zwei nichtparallele Kontaktflächen aufweisen.

2. Anordnung nach Anspruch 1, **dadurch gekennzeichnet, dass** die Anordnung mehrere erste Ausrichtungselemente (16) und mehrere zweite Ausrichtungselemente (34) umfasst, wobei jeweils ein erstes Ausrichtungselement (16) und ein zweites Ausrichtungselement (34) einander zugeordnet sind und jeweils die einander zugeordneten Ausrichtungselemente (16, 34) wenigstens abschnittsweise formkomplementär zueinander ausgebildet sind.

3. Anordnung nach Anspruch 1 oder 2, wobei die Stegsetzvorrichtung (1) wenigstens eine Haltevorrichtung (10) zum Halten des Steges (30) und wenigstens ein erstes Ausrichtungselement (16) umfasst.

4. Anordnung nach Anspruch 3, **dadurch gekennzeichnet, dass** die Haltevorrichtung (10) mit wenigstens einer Saugvorrichtung (14) zum Halten des Steges (30) mittels eines Saugdrucks ausgebildet ist.

5. Anordnung nach Anspruch 3 oder 4, **dadurch gekennzeichnet, dass** die Stegsetzvorrichtung (1) ferner über einen Träger (20) verfügt, an dem die wenigstens eine Haltevorrichtung (10) befestigt ist, wobei insbesondere die wenigstens eine Haltevorrichtung (10) schwenkbar am Träger (20) gelagert ist.

6. Anordnung nach einem der Ansprüche 3 bis 5,
**dadurch gekennzeichnet, dass** die Stegsetzvorrichtung (1) Aufsetzlager zum Aufsetzen der Stegsetzvorrichtung (1) auf eine Absenkvorrichtung zum Heben und/oder Senken der Stegsetzvorrichtung(1) umfasst, wobei die Aufsetzlager insbesondere am Träger (20) der Stegsetzvorrichtung (1) angeordnet sind.

7. Anordnung nach einem der Ansprüche 3 bis 6,**dadurch gekennzeichnet, dass** die Stegsetzvorrichtung (1) eine Absenkvorrichtung zum Heben und/oder Senken der wenigstens einen Haltevorrichtung (10) und/oder des Trägers (20) umfasst.

8. Anordnung nach einem der vorangehenden Ansprüche, **dadurch gekennzeichnet,dass** der Steg (30) als Faserverbundbauteil ausgebildet ist, wobei das wenigstens eine zweite Ausrichtungselement (34) bei Fertigung des Steges (30) in Faserverbundbauweise mittels einer Stegfertigungsform an dem Steg (30) angeordnet oder ausgebildet ist oder wird.

9. Anordung nach einem der vorangehenden Ansprüche, **dadurch gekennzeichnet, dass** der Steg (30) einen ersten Stegfuß (32) zur Verbindung mit einem ersten Gurt (40), einen zweiten Stegfuß (32) zur Verbindung mit einem zweiten Gurt (40) und eine zwischen dem ersten Stegfuß(32) und dem zweiten Stegfuß (32) angeordnete Seitenfläche aufweist, wobei das wenigstens eine zweite Ausrichtungselement (34) an der Seitenfläche angeordnet oder ausgebildet ist.

10. Anordung nach einem der vorangehenden Ansprüche **dadurch gekennzeichnet, dass** das wenigstens eine zweite Ausrichtungselement (34) als Erhebung über einer Oberfläche, insbesondere der Seitenfläche, des Steges (30) ausgebildet ist.

11. Verfahren zum Fertigen eines Rotorblattes für eine Windenergieanlage, wobei das Rotorblatt wenigstens eine Rotorblattschale, einen mit der Rotorblattschale verbundenen Gurt (40) und einen mit dem Gurt (40) verbundenen Steg (30) aufweist, wobei das Verfahren die folgenden Verfahrensschritte umfasst:
- Fertigen des Gurts (40) in einer Gurtfertigungsform;
- Verbinden des Steges (30) mit dem Gurt (40) und
- Fertigen der Rotorblattschale in einer Schalenfertigungs- form (50), wobei der Gurt (40) und der mit dem Gurt (40) verbundene Steg (30) gemeinsam in die Schalenfertigungsform (50) eingebracht werden, **dadurch gekennzeichnet, dass** der Steg (30) und der Gurt (40) unter Verwendung einer Anordnung nach einem der vorangehenden Ansprüche miteinander verbunden werden.

12. Verfahren nach Anspruch 11, **dadurch gekennzeichnet, dass** der Steg (30) und der Gurt (40) vor Entformen des Gurtes (40) aus der Gurtfertigungsform miteinander verbunden werden.

13. Verfahren nach einem der Ansprüche 11 bis 12, **dadurch gekennzeichnet, dass** der Gurt (40) und der mit dem Gurt (40) verbundene Steg (30) mittels der Stegsetzvorrichtung (1), in die Schalenfertigungsform (50) eingebracht werden.

## Claims

1. An assembly for aligning a web (30) for a rotor blade of a wind energy installation and a web setting device (1) for the web (30), wherein the assembly comprises at least a first alignment element (16) on the web setting device (1) and at least a second alignment element (34) on the web (30), wherein the first alignment element (16) and the second alignment element (34) are constructed so as to be complementary in shape with respect to one another, at least in sections,
**characterised in that** the alignment elements (16, 34) have surfaces which are complementary in shape and which each have at least two non-parallel contact surfaces.

2. The assembly according to claim 1, **characterised in that** the assembly comprises a plurality of first alignment elements (16) and a plurality of second alignment elements (34), wherein each of the first alignment elements (16) and each of the second alignment elements (34) are assigned to one another in a one to one relationship and wherein each of the mutually assigned alignment elements (16, 34) are constructed to be complementary in shape to one another, at least in sections.

3. The assembly according to claim 1 or 2, wherein the web setting device (1) comprises at least one holding device (10) for holding the web (30) and at least a first alignment element (16).

4. The assembly according to claim 3, **characterised in that** the holding device (10) is constructed so as to have at least one suction device (14) for holding the web (30) by means of a negative pressure.

5. The assembly according to claim 3 or 4, **characterised in that** the web setting device (1) further comprises a support (20) on which the at least one holding device (10) is fixed, in particular wherein the at least one holding device (10) is pivotably mounted on the support (20).

6. The assembly according to any one of the claims 3 to 5, **characterised in that** the web setting device (1) comprises support bearings for setting the web setting device (1) onto a lowering device for raising and / or lowering the web setting device (1), wherein the support bearings are arranged in particular on the support (20) of the web setting device (1).

7. The assembly according to any one of the claims 3 to 6, **characterised in that** the web setting device (1) comprises a lowering device for raising and / or lowering of the at least one holding device (10) and / or of the support (20).

8. The assembly according to any one of the preceding claims, **characterised in that** the web (30) is constructed as a fibre composite component, wherein the at least one second alignment element (34) is or becomes arranged or is or becomes formed on the web (30) in fibre composite construction by means of a web manufacturing mould when the web (30) is being constructed.

9. The assembly according to any one of the preceding claims, **characterised in that** the web (30) comprises a first web foot (32) for connection to a first spar cap (40), a second web foot (32) for connection to a second spar cap (40) and a side surface arranged between the first web foot (32) and the second web foot (32), wherein the at least one second alignment element (34) is arranged or formed on the side surface.

10. The assembly according to any one of the preceding claims, **characterised in that** the at least one second alignment element (34) is formed as a raised portion above a surface, in particular the side surface, of the web (30).

11. A method of manufacturing a rotor blade for a wind energy installation, wherein the rotor blade comprises at least one rotor blade shell, a spar cap (40) which is connected to the rotor blade shell, and a web (30) which is connected to the spar cap (40), wherein the method comprises the following method steps:
- manufacturing the spar cap (40) in a spar cap manufacturing mould;
- connecting the web (30) with the spar cap (40); and
- manufacturing the rotor blade shell in a shell manufacturing mould (50), wherein the spar cap (40) and the web (30) which is connected to the spar cap (40) are jointly inserted into the shell manufacturing mould (50),
**characterised in that** the web (30) and the spar cap (40) are joined together using an assembly according to any one of the preceding claims.

12. The method according to claim 11, **characterised in that** the web (30) and the spar cap (40) are joined together before the spar cap (40) is removed from the spar cap manufacturing mould.

13. The method according to any one of the claims 11 to 12, **characterised in that** the spar cap (40) and the web (30) which is connected to the spar cap (40) are introduced into the shell manufacturing mould (50) by means of the web setting device (1).

## Revendications

1. Agencement pour l'alignement d'une barre (30) pour une pale de rotor d'une éolienne et d'un dispositif de mise en place de barre (1) pour la barre (30), dans lequel l'agencement comprend au moins un premier élément d'alignement (16) au niveau du dispositif de mise en place de barre (1) et au moins un deuxième élément d'alignement (34) au niveau de la barre (30), dans lequel le premier élément d'alignement (16) et le deuxième élément d'alignement (34) sont réalisés au moins par section de forme complémentaire l'un par rapport à l'autre,
**caractérisé en ce que** les éléments d'alignement (16, 34) présentent des surfaces de forme complémentaire, qui présentent respectivement au moins deux surfaces de contact non parallèles.

2. Agencement selon la revendication 1, **caractérisé en ce que** l'agencement comprend plusieurs premiers éléments d'alignement (16) et plusieurs deuxièmes éléments d'alignement (34), dans lequel respectivement un premier élément d'alignement (16) et un deuxième élément d'alignement (34) sont associés l'un à l'autre et respectivement les éléments d'alignement (16, 34) associés l'un à l'autre sont réalisés au moins par section de forme complémentaire l'un par rapport à l'autre.

3. Agencement selon la revendication 1 ou 2, dans lequel le dispositif de mise en place de barre (1) comprend au moins un dispositif de retenue (10) pour retenir la barre (30) et au moins un premier élément d'alignement (16).

4. Agencement selon la revendication 3, **caractérisé en ce que** le dispositif de retenue (10) est réalisé avec au moins un dispositif d'aspiration (14) pour retenir la barre (30) au moyen d'une pression d'aspiration.

5. Agencement selon la revendication 3 ou 4, **caractérisé en ce que** le dispositif de mise en place de barre (1) dispose en outre d'un support (20), au niveau duquel l'au moins un dispositif de retenue (10) est fixé, dans lequel en particulier l'au moins un dispositif de retenue (10) est logé de manière pivotante au niveau du support (20).

6. Agencement selon l'une quelconque des revendications 3 à 5,
**caractérisé en ce que** le dispositif de mise en place de barre (1) comprend des paliers de pose pour la pose du dispositif de mise en place de barre (1) sur un dispositif d'abaissement pour lever et/ou descendre le dispositif de mise en place de barre (1), dans lequel les paliers de pose sont agencés en particulier au niveau du support (20) du dispositif de mise en place de barre (1).

7. Agencement selon l'une quelconque des revendications 3 à 6, **caractérisé en ce que** le dispositif de mise en place de barre (1) comprend un dispositif d'abaissement pour lever et/ou descendre l'au moins un dispositif de retenue (10) et/ou le support (20).

8. Agencement selon l'une quelconque des revendications précédentes, **caractérisé en ce que** la barre (30) est réalisée en tant que composant composite renforcé par fibres, dans lequel l'au moins un deuxième élément d'alignement (34) est agencé ou réalisé lors de la fabrication de la barre (30) à la manière d'un composite renforcé par fibres au moyen d'un moule de fabrication de barre au niveau de la barre (30).

9. Agencement selon l'une quelconque des revendications précédentes, **caractérisé en ce que** la barre (30) présente un premier pied de barre (32) pour la liaison à une première ceinture (40), un deuxième pied de barre (32) pour la liaison à une deuxième ceinture (40) et une surface latérale agencée entre le premier pied de barre (32) et le deuxième pied de barre (32), dans lequel l'au moins un deuxième élément d'alignement (34) est agencé ou réalisé au niveau de la surface latérale.

10. Agencement selon l'une quelconque des revendications précédentes, **caractérisé en ce que** l'au moins un deuxième élément d'alignement (34) est réalisé en tant que surélévation par rapport à une surface, en particulier la surface latérale, de la barre (30).

11. Procédé de fabrication d'une pale de rotor pour une éolienne, dans lequel la pale de rotor présente au moins une coque de pale de rotor, une ceinture (40) reliée à la coque de pale de rotor et une barre (30) reliée à la ceinture (40), dans lequel le procédé comprend les étapes de procédé suivantes :
- fabrication de la ceinture (40) dans un moule de fabrication de ceinture ;
- liaison de la barre (30) à la ceinture (40) et
- fabrication de la coque de pale de rotor dans un moule de fabrication de coque (50), dans lequel la ceinture (40) et la barre (30) reliée à la ceinture (40) sont introduites conjointement dans le moule de fabrication de coque (50),
**caractérisé en ce que** la barre (30) et la ceinture (40) sont reliées l'une à l'autre en utilisant un agencement selon l'une quelconque des revendications précédentes.

12. Procédé selon la revendication 11, **caractérisé en ce que** la barre (30) et la ceinture (40) sont reliées l'une à l'autre avant démoulage de la ceinture (40) du moule de fabrication de ceinture.

13. Procédé selon l'une quelconque des revendications 11 à 12, **caractérisé en ce que** la ceinture (40) et la barre (30) reliée à la ceinture (40) sont introduites dans le moule de fabrication de coque (50) au moyen du dispositif de mise en place de barre (1).
